# FASCICULE DE BREVET EUROPEEN

(11) **EP 1 971 797 B1**
(45) Date de publication et mention de la délivrance du brevet: **22.04.2009**
(21) Numéro de dépôt: 07717799.6
(22) Date de dépôt: 08.01.2007
(51) Int. Cl.: F16L 3/015, B64C 1/14

(54) **DISPOSITIF DE GUIDAGE D ' UN CABLE D ' UN GLACE OUVRANTE**
VORRICHTUNG ZUM SCHUTZ UND ZUR FÜHRUNG EINES KABELS EINES ÖFFENBAREN FENSTERS EINER FLUGZEUGKABINE
DEVICE FOR PROTECTING AND GUIDING A CABLE OF AN OPENABLE WINDOW OF AN AIRCRAFT FLIGHT CABIN

(30) Priorité: 10.01.2006 FR 0650086
(43) Date de publication de la demande: 24.09.2008
(73) Titulaire: Airbus France SAS, 31060 Toulouse (FR)
(72) Inventeur: BIANCALANA, Olivier, 31200 Toulouse (FR)
(74) Mandataire: Fantin, Laurent
(86) Numéro de dépôt international: PCT/FR2007/050621
(87) Numéro de publication internationale: WO 2007/080344

(56) Documents cités:
- EP-A1- 1 378 400
- WO-A-20/05098186
- JP-A- 2005 238 932

## Description

La présente invention se rapporte à un dispositif de protection et de guidage d'un câble, tel qu'un câble d'alimentation électrique, d'une glace ouvrante d'une cabine de pilotage d'aéronef. Un dispositif de protection et de guidage d'un câble d'une porte ouvrante d'un véhicule automobile est connu du document EP1378400.

La cabine de pilotage comprend un pare-brise incorporant sur au moins un côté une glace ouvrante. Cette glace ouvrante comprend un châssis vitré mobile par rapport à un support délimitant une couverture ménagée au niveau du pare-brise. Pour ouvrir la glace ouvrante, il est nécessaire d'effectuer une première translation vers l'intérieur de la cabine pour décaler ladite glace ouvrante du support puis une seconde translation pour faire coulisser la glace ouvrante de manière sensiblement parallèle au pare-brise pour dégager l'ouverture. A cet effet, l'ouverture comprend en partie inférieure un entablement définissant un plan de glissement sur lequel peut coulisser la glace ouvrante lors des deux translations. Ce plan de glissement est généralement incliné de l'ordre de 20 à 40°, notamment en fonction des formes de la cabine de pilotage.

Généralement, la glace ouvrante est reliée au support par l'intermédiaire d'au moins un câble prévu pour l'alimentation électrique du système de dégivrage et d'une liseuse.

Pour autoriser les mouvements de la glace ouvrante, le câble comprend une portion en forme de « queue de cochon ».

Cette solution simple ne donne pas satisfaction car le câble en forme de « queue de cochon » α tendance à se détendre après seulement quelques cycles. Ce câble détendu constitue une gêne pour les navigants qui peuvent s'y entraver, voire un risque dans la mesure où les instruments de navigation peuvent s'y accrocher.

Par ailleurs, la non tenue mécanique du câble en forme de « queue de cochon » peut provoquer à chaque extrémité du câble des risques de pincements susceptibles d'engendrer la rupture des câbles électriques internes. Ceci se traduit par des dysfonctionnements des appareils alimentés par ledit câble, notamment du système de dégivrage.

L'invention vise à pallier aux inconvénients de l'art antérieur en proposant un dispositif de guidage et de protection du câble reliant la glace ouvrante et son support permettant de limiter les risques de dysfonctionnements et de gêne pour les navigants.

A cet effet, l'invention a pour objet un dispositif de protection et de guidage d'au moins un câble reliant d'une part une glace ouvrante d'une cabine d'aéronef prévue pour obturer une ouverture, et d'autre part, son support, ladite glace ouvrante étant susceptible de se translater selon une première translation, vers l'intérieur de la cabine, de manière à occuper une position intermédiaire décalée par rapport au support, puis selon une seconde translation de dégagement de manière à dégager l'ouverture, caractérisé en ce qu'il comprend une chaîne porte-câble susceptible de se déformer selon un plan d'enroulement et de protéger et guider ledit câble, de part et d'autre de ladite chaîne porte-câble, un premier support articulé par rapport à la glace ouvrante de manière à pouvoir pivoter autour d'un axe d'articulation sensiblement parallèle à la translation de dégagement et un second support articulé par rapport au support de manière à pouvoir pivoter autour d'un axe d'articulation sensiblement parallèle à la translation de dégagement et en ce que les premier et second supports ont une section transversale en équerre, une branche de l'équerre étant susceptible de servir d'appui à la chaîne porte-câble, l'autre branche étant utilisée comme élément protecteur de la chaîne porte-câble et étant articulée au niveau de son bord fibre soit par rapport à la glace ouvrante soit par rapport au support de la glace ouvrante.

Cet agencement permet d'obtenir une protection du câble susceptible de se déformer lors des mouvements de la glace ouvrante tout en conservant une certaine rigidité.

D'autres caractéristiques et avantages ressortiront de la description qui va suivre de l'invention, description donnée à titre d'exemple uniquement, en regard des dessins annexés sur lesquels :
- la figure 1A est une coupe verticale schématique d'une glace ouvrante en position fermée,
- la figure 1B est une coupe verticale schématique d'une glace ouvrante décalée par rapport à son support,
- la figure 2A est une vue en élévation latérale illustrant une glace ouvrante au droit de l'ouverture,
- la figure 2B est une vue en élévation latérale illustrant une glace ouvrante dégageant une ouverture,
- les figures 3A à 3C sont un synoptique illustrant le fonctionnement du dispositif selon l'invention,
- la figure 4A est une coupe verticale illustrant le dispositif de l'invention selon un mode de réalisation, la glace ouvrante en position fermée,
- la figure 4B est une coupe verticale illustrant le dispositif de la figure 4A, la glace ouvrante en position décalée par rapport à son support,
- la figure 5A est une vue en élévation de dessous du dispositif de l'invention selon un mode de réalisation, la glace ouvrante en position fermée, et
- la figure 5B est une vue en élévation de dessous du dispositif de la figure 5A, la glace ouvrante en position ouverte.

Sur les différents figures, on a représenté en 10 une glace ouvrante susceptible d'obturer une ouverture 12 délimitée par un support 14 incorporé dans le pare-brise d'une cabine de pilotage d'un aéronef.

Selon un mode de réalisation, la glace ouvrante comprend un châssis vitré susceptible d'incorporer un dispositif de dégivrage et/ou de supporter une liseuse par exemple ou tout autre dispositif.

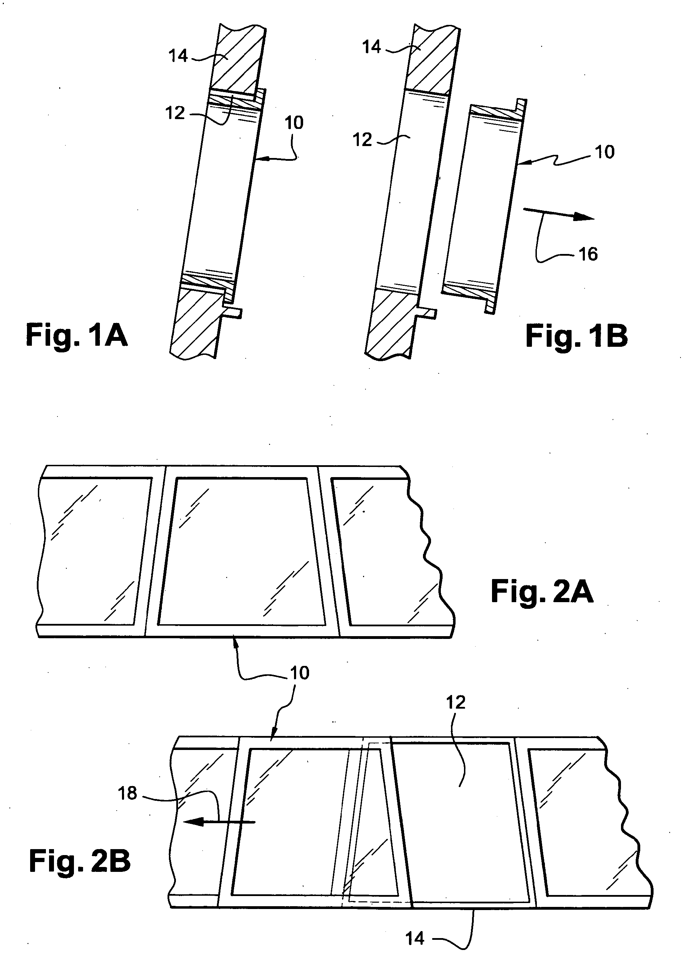

Cette glace ouvrante 10 est mobile par rapport au support 14 de manière à occuper une position fermée, illustrée sur la figure 1A, dans laquelle elle obture l'ouverture 12 et une position ouverte, illustrée sur la figure 2B, dans laquelle elle dégage l'ouverture 12. Pour passer d'une position à l'autre, la glace ouvrante 10 peut se translater selon une première translation, matérialisée par la flèche 16, vers l'intérieur de la cabine, de manière à occuper une position intermédiaire, illustrée sur la figure 1B, décalée par rapport au support 14, puis selon une seconde translation dite de dégagement, matérialisée par la flèche 18, de manière à dégager l'ouverture 12.

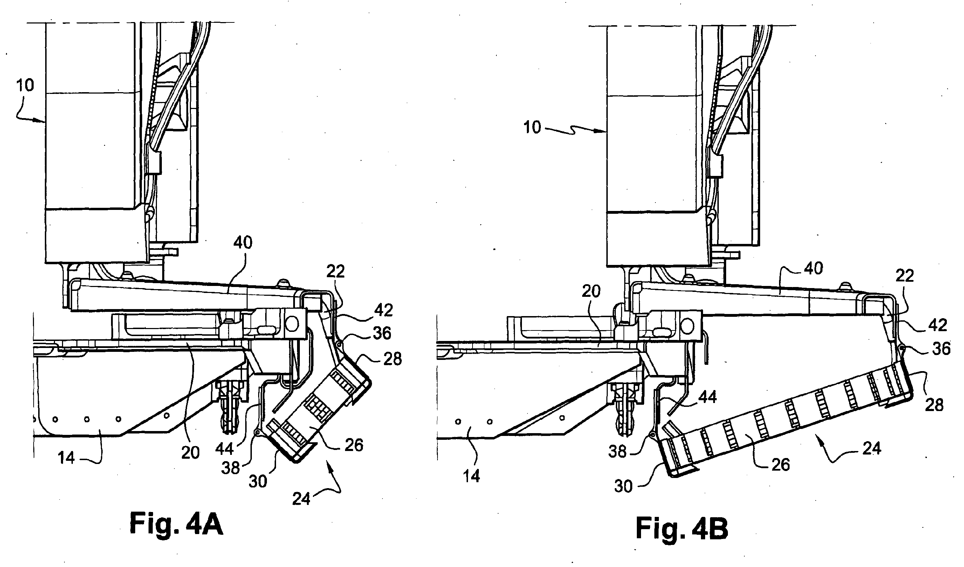

Selon un mode de réalisation, le support comprend en partie inférieure, sous la glace ouvrante, un entablement 20 définissant un plan de glissement sur lequel est susceptible de coulisser la glace ouvrante lors du changement de position entre la position fermée et la position ouverte. Ce plan de glissement est généralement légèrement incliné de quelques dizaines de degrés, de l'ordre de 20 à 40°. Sur les figures 4A et 4B, le plan de glissement est illustré à l'horizontale pour simplifier la représentation, même s'il peut être incliné en réalité.

La liaison entre la glace ouvrante 10 et le support 14, les formes, les dimensions et les matériaux des différents éléments de la glace ouvrante 10 et du support 14 ne sont pas plus détaillés car ils sont connus de l'homme du métier.

La glace ouvrante 10 et le support 14 sont reliés par au moins un câble 22, notamment un câble électrique pour l'alimentation électrique d'appareils incorporés dans la glace ouvrante ou supportés par cette dernière.

Pour la suite de la description, on entend par câble, un câble ou un ensemble de câbles accolés les uns au autres, ces câbles pouvant avoir différentes fonctions, par exemple l'alimentation électrique ou la transmission de signaux.

Selon l'invention, un dispositif de guidage et de protection 24 est prévu pour le câble 22 entre la glace ouvrante 10 et le support 14. Ce dispositif 24 comprend une chaîne porte-câble 26 reliée d'une part à un premier support 28 articulé par rapport à la glace ouvrante 10, et d'autre part, à un second support 30 articulé par rapport au support 14.

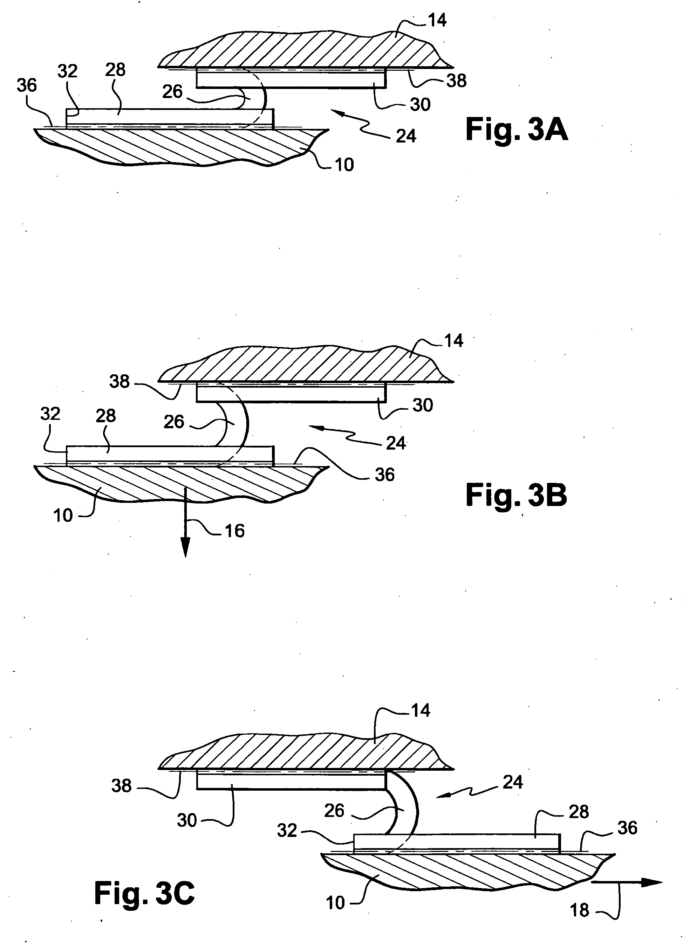

La chaîne porte-câble 26 comporte une pluralité de chaînons reliés deux à deux par l'intermédiaire d'axes de rotation parallèles entre eux afin que ladite chaîne porte-câble 26 puisse se déformer dans un plan appelé plan d'enroulement. Ainsi, la chaîne porte-câble 26 a une forme en U avec des branches dont les longueurs peuvent varier en fonction de la position relative de la glace ouvrante et du support, comme illustré sur les figures 3A et 3C, et dont l'écartement peut varier, notamment lors de la première translation de la glace ouvrante, comme illustré sur les figures 3A et 3B.

Les chaînons de la chaîne porte-câble 26 ont des formes adaptées, avec une section transversale en U par exemple, pour servir d'éléments de guidage et de protection du câble 22.

Selon un mode de réalisation, la chaîne porte-câble 26 peut être en matière plastique.

Selon une caractéristique de l'invention, la chaîne porte-câble 26 peut se déformer de manière à suivre les mouvements de la glace ouvrante tout en conservant une certaine rigidité afin de protéger le câble 22. De plus, le câble ne peut pas être pincé car la chaîne porte-câble s'enroule selon un rayon d'enroulement qui ne peut pas être inférieur à un certain seuil.

Une première extrémité 32 de la chaîne porte-câble 26 est reliée au premier support 28 et une seconde extrémité 34 de la chaîne porte-câble 26 est reliée au second support 30. Ainsi comme illustré sur les figures 3A à 3C, la première branche et la seconde branche de la chaîne porte-câble sont susceptibles d'être plaquées respectivement contre le premier support 28 et le second support 30.

Le premier support 28 est articulé par rapport à la glace ouvrante 10 de manière à pouvoir pivoter autour d'un axe d'articulation 36 sensiblement parallèle à la translation de dégagement 18. Selon un mode de réalisation, cette articulation peut être réalisée grâce à une charnière d'axe de rotation l'axe 36.

Le second support 30 est articulé par rapport au support 14 de manière à pouvoir pivoter autour d'un axe d'articulation 38 sensiblement parallèle à la translation de dégagement 18. Selon un mode de réalisation, cette articulation peut être obtenue grâce à une charnière d'axe de rotation, l'axe 38.

Selon un mode de réalisation, les premier et second supports 28, 30 ont une section transversale en équerre, une branche de l'équerre étant susceptible de servir d'appui à la chaîne porte-câble 26, l'autre branche étant utilisée comme élément protecteur de la chaîne porte-câble et étant articulée au niveau de son bord libre, soit par rapport à la glace ouvrante, soit par rapport au support 14.

Les articulations 36 et 38 sont nécessaires en raison du changement d'inclinaison du plan d'enroulement de la chaîne porte-câble 26 lors de la première translation 16 de la glace ouvrante, comme illustré sur les figures 4A et 4B.

La chaîne porte-câble 26 autorise non seulement un premier mouvement de translation entre la glace ouvrante et le support permettant à ladite glace de dégager l'ouverture mais également un autre mouvement de translation, sensiblement perpendiculaire au premier, permettant à la glace ouvrante de s'écarter de son support, grâce à une modification du rayon d'enroulement de ladite chaîne porte-câble 26, comme illustré sur les figures 3A et 3B.

Selon un autre avantage de l'invention, le câble 22 ne subit pas de pincement en raison de la présence de la chaîne porte-câble, ce qui permet de limiter les risques de dysfonctionnement.

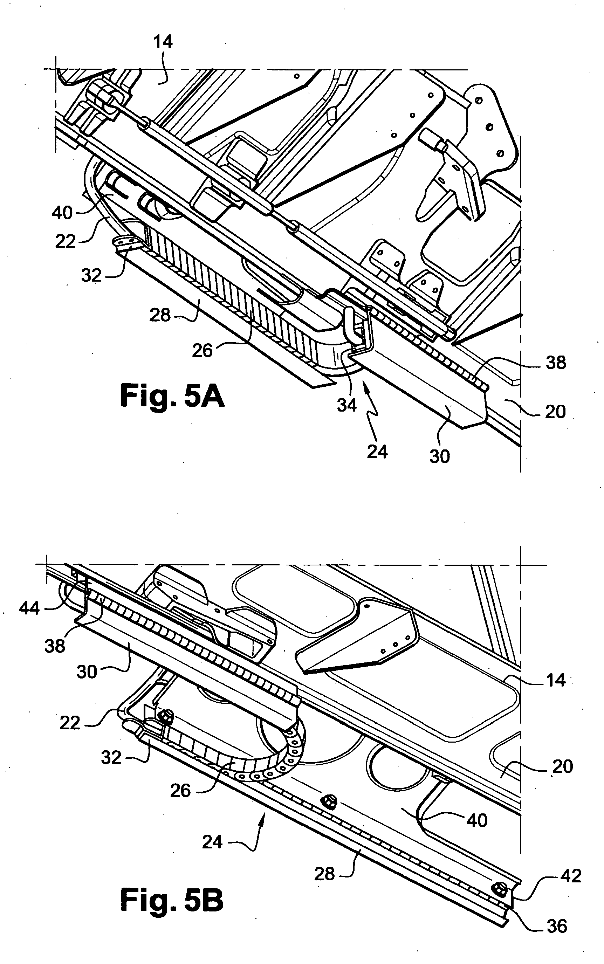

Sur les figures 4A, 4B, 5A et 5B, on a représenté un dispositif de guidage et de protection selon un mode de réalisation préféré de l'invention.

La glace ouvrante 10 comprend au niveau de son bord inférieur un carter 40 sensiblement parallèle à l'entablement 20 du support. Ce carter 40 se prolonge de manière à avoir son bord orienté vers l'intérieur de la cabine décalé vers l'intérieur de la cabine par rapport au bord de l'entablement 20 orienté vers l'intérieur de la cabine lorsque la glace ouvrante est en position fermée. Le carter 40 comprend un rebord 42 orienté vers le bas au niveau de l'extrémité libre duquel est prévu l'axe d'articulation 36, le premier support 28 étant susceptible de pivoter autour dudit axe d'articulation 36.

L'entablement 20 comprend en partie inférieure une patte 44 orientée vers le bas, au niveau de l'extrémité libre de laquelle est prévu l'axe d'articulation 38, le second support 30 étant susceptible de pivoter autour dudit axe d'articulation 38. La chaîne porte-câble 26 est interposée entre les premier et second supports 28, 30.

Selon cette configuration, la chaîne porte-câble 26 est protégée par le carter 40 et disposée sous le carter 40, ce qui limite les risques de gêne pour les navigants.

En variante, le dispositif de protection et de guidage du câble pourrait être placé au niveau du bord supérieur de la glace ouvrante.

Lorsque la glace ouvrante est en position fermée, comme illustré sur les figures 4A et 5A, la chaîne porte-câble 26 a un faible rayon d'enroulement et le premier support 28 est disposé à une première extrémité du second support fixe 30. Lorsqu'on souhaite ouvrir la glace ouvrante, il est nécessaire d'effectuer une première translation de manière à écarter ladite glace du support 14. Comme illustré sur la figure 4B, lorsque la glace ouvrante est dans la position intermédiaire, la chaîne porte-câble 26 a un rayon d'enroulement plus important. Lorsque la glace ouvrante 10 est en position ouverte après la seconde translation, le premier support 28 est disposé à l'autre extrémité du second support fixe 30 par rapport à la position fermée.

## Revendications

1. Dispositif de protection et de guidage d'au moins un câble (22) reliant d'une part une glace ouvrante (10) d'une cabine d'aéronef prévue pour obturer une ouverture (12), et d'autre part, son support (14), ladite glace ouvrante (10) étant susceptible de se translater selon une première translation (16), vers l'intérieur de la cabine, de manière à occuper une position intermédiaire décalée par rapport au support (14), puis selon une seconde translation de dégagement (18), de manière à dégager l'ouverture (12), **caractérisé en ce qu'**il comprend une chaîne porte-câble (26) susceptible de se déformer selon un plan d'enroulement et de protéger et guider ledit câble (22), de part et d'autre de ladite chaîne porte-câble (26), un premier support (28) articulé par rapport à la glace ouvrante (10) de manière à pouvoir pivoter autour d'un axe d'articulation (36) sensiblement parallèle à la translation de dégagement (18) et un second support (30) articulé par rapport au support (14) de manière à pouvoir pivoter autour d'un axe d'articulation (38) sensiblement parallèle à la translation de dégagement (18) et **en ce que** les premier et second supports (28, 30) ont une section transversale en équerre, une branche de l'équerre étant susceptible de servir d'appui à la chaîne porte-câble (26), l'autre branche étant utilisée comme élément protecteur de la chaîne porte-câble et étant articulée au niveau de son bord libre soit par rapport à la glace ouvrante soit par rapport au support de la glace ouvrante.

2. Dispositif de protection et de guidage selon la revendication 1, **caractérisé en ce que** la chaîne porte-câble (26) comporte une pluralité de chaînons reliés deux à deux par l'intermédiaire d'axes de rotation parallèles entre eux afin que ladite chaîne porte-câble (26) puisse se déformer dans le plan d'enroulement.

3. Dispositif de protection et de guidage selon la revendication 1 ou 2, **caractérisé en ce qu'**il comprend un carter (40), rapporté en partie inférieure de la glace ouvrante parallèle à un entablement (20) relié au support (14) de la glace ouvrante, ledit carter (40) comportant un rebord (42) orienté vers le bas au niveau de l'extrémité libre duquel est prévu l'axe d'articulation (36) du premier support (28), l'entablement (20) comportant en partie inférieure une patte (44) orientée vers le bas, au niveau de l'extrémité libre de laquelle est prévu l'axe d'articulation (38) du second support (30).

## Claims

1. Device for protecting and guiding at least one cable (22) that connects, on the one hand, a direct-vision window (10) of an aircraft cabin that is provided for blocking an opening (12), and, on the other hand, its support (14), whereby said direct-vision window (10) can move translationally according to a first translation (16), toward the inside of the cabin, so as to occupy an intermediate position that is offset relative to the support (14), then according to a second release translation (18), so as to release the opening (12), **characterized in that** it comprises a cable chain (26) that can deform along a winding plane and protect and guide said cable (22), on both sides of said cable chain (26), a first support (28) that is articulated relative to the direct-vision window (10) so as to be able to pivot around an axis of articulation (36) that is essentially parallel to the release translation (18), and a second support (30) that is articulated relative to the support (14) so as to be able to pivot around an axis of articulation (38) that is essentially parallel to the release translation (18), and **in that** the first and second supports (28, 30) have a square cross-section, whereby one side of the square can be used as a support to the cable chain (26), and the other side is used as a protective element of the cable chain and is articulated at the level of its free edge or relative to the direct-vision window or relative to the support of the direct-vision window.

2. Protection and guide device according to claim 1, wherein the cable chain (26) comprises a number of links that are connected two by two by means of axes of rotation that are parallel to one another, so that said cable chain (26) can deform in the winding plane.

3. Protection and guide device according to claim 1 or 2, wherein it comprises a crankcase (40), inserted in the lower part of the direct-vision window parallel to a table (20) that is connected to the support (14) of the direct-vision window, whereby said crankcase (40) comprises a flange (42) that is oriented downward at the level of the free end from which is provided the axis of articulation (36) of the first support (28), whereby the table (20) comprises, at the lower part, a foot (44) that is oriented downward, at the level of the free end from which is provided the axis of articulation (38) of the second support (30).

## Patentansprüche

1. Schutz- und Führungsvorrichtung für mindestens ein Kabel (22), das einerseits eine zum Verschließen einer Öffnung (12) vorgesehene öffenbare Scheibe (10) einer Luftfahrzeugkabine und andererseits deren Träger (14) verbindet, wobei die öffenbare Scheibe (10) entlang einer ersten Translationsbewegung (16) zum Inneren der Kabine hin derart verschieblich ist, dass sie eine im Verhältnis zum Träger (14) versetzte Zwischenposition einnimmt, dann entlang einer zweiten freigebenden Translationsbewegung (18) zur Freigabe der Öffnung (12) verschieblich ist, **dadurch gekennzeichnet, dass** sie umfasst: eine Kabelhaltekette (26), die entlang einer Einrollebene verformbar ist und das Kabel (22) zu schützen und zu führen vermag, auf der einen und anderen Seite der Kabelhaltekette (26) einen ersten Träger (28), der an der öffenbaren Scheibe (10) derart angelenkt ist, dass er um eine im Wesentlichen parallel zur freigebenden Translationsbewegung (18) sich erstreckende Anlenkachse (36) schwenkbar ist, und einen zweiten Träger (30), der am Träger (14) derart angelenkt ist, dass er um eine im Wesentlichen parallel zur freigebenden Translationsbewegung (18) sich erstreckende Anlenkachse (38) schwenkbar ist, und dass der erste und der zweite Träger (28, 30) einen einen Winkel bildenden Querschnitt aufweisen, wobei ein Schenkel des Winkels der Kabelhaltekette (26) als Stütze dienen kann, wobei der andere Schenkel als Schutzelement für die Kabelhaltekette verwendet wird und im Bereich seines freien Rands entweder an der öffenbaren Scheibe oder am Träger der öffenbaren Scheibe angelenkt ist.

2. Schutz- und Führungsvorrichtung nach Anspruch 1, **dadurch gekennzeichnet, dass** die Kabelhaltekette (26) eine Vielzahl von Gliedern aufweist, die paarweise über parallel zueinander sich erstreckende Drehachsen miteinander verbunden sind, damit die Kabelhaltekette (26) sich in der Einrollebene verformen kann.

3. Schutz- und Führungsvorrichtung nach Anspruch 1 oder 2, **dadurch gekennzeichnet, dass** sie ein Gehäuse (40) umfasst, das im unteren Teil der öffenbaren Scheibe, parallel zu einem mit dem Träger (14) der öffenbaren Scheibe verbundenen Gesims (20), angesetzt ist, wobei das Gehäuse (40) einen Rand (42) aufweist, der nach unten ausgerichtet ist und im Bereich des freien Endes die Anlenkachse (36) des ersten Trägers (28) vorgesehen ist, wobei das Gesims (20) im unteren Teil eine nach unten gerichtete Lasche (44) aufweist, im Bereich deren freien Endes die Anlenkachse (38) des zweiten Trägers (30) vorgesehen ist.
